# EUROPEAN PATENT APPLICATION

(11) **EP 1 903 714 A1**
(43) Date of publication of application: **26.03.2008**
(21) Application number: 06121173.6
(22) Date of filing: 25.09.2006
(51) Int. Cl.: H04L 12/14

(54) **Method for accounting based call control**

(71) Applicant: Nokia Siemens Networks GmbH & Co. KG, 81541 München (DE)
(72) Inventor: Chormoviti, Alexandra, 14231, N. Lonia (GR)
(74) Representative: Maier, Daniel Oliver

(57) **Abstract**

The invention relates to a method for call control using accounting information, wherein said control is on a per call basis. Accounting related restrictions (ACC) are entered for a certain call and these restrictions are supervised during said call. Said call is then automatically released and/or a user (Sub A) is notified, if the accounting related restrictions (ACC) are reached. For example credit limits can be entered as accounting related restrictions (ACC) by the user (Sub A). When the accounting related restrictions (ACC) are reached, a notification of the user (Sub A) can be done by a notification message and/or by an announcement and/or by a special tone. The administration of accounting related restrictions (ACC) can be done either via a so called subscriber control input (SCI) or by a menu selection point. The accounting related restrictions (ACC) can be administered for certain groups of users or called parties (Sub B) and/or for certain categories of calls made (e.g. local calls, international calls, calls to certain areas, etc.).

The present invention provides a simple solution for offering the possibility to control the costs of a call or a transaction on a per call/transaction basis by entering accounting related information (e.g. amount, time, credit limit, etc.) as restrictions.

## Description

### Field of the invention

The invention relates to a method for call control using accounting information, wherein said control is on a per call basis.

### Background of the invention

Telecommunications means the transmission of signals over a distance for the purpose of communication. Today, telecommunication is widespread and there are devices that assist the process such as for examples television, radio, telephones, etc. In general telephones are used for direct communication over a distance from one person to another.

A telephone call is therefore a connection over a so called telephone network (e.g. fixed network, mobile network, etc.) between two parties. A telephone call may e.g. consist of an ordinary voice transmission using a telephone, a data transmission using modems (e.g. to use the Internet, etc.) or a facsimile transmission when the two parties are using fax machines.

Usually a telephone call has two parties - a calling party or originator and a called party. The calling party is a person by whom (or a device by that) a call is initiated over a telephone network (e.g. fixed network, PSTN, mobile network, etc.). The person by whom (or the device by that) a call is answered is the called party. When a telephone call includes more than one called party, it is referred to as a conference call.

Calls are usually charged with a fee for the connection. Said fee depends e.g. on the provider (e.g. fixed network operator, mobile operator, Internet service provider, etc.) of the service, the type of service being used (e.g. voice call, Internet usage, call placed from fixed or from mobile network, etc.) and the distance between the calling and the called party (e.g. local call, national call, international call, etc.).

In most circumstances, said fee for the call is paid by the calling party or originator of the call. However, in some special circumstances such as for example reverse charge, collect call, usage of a so called freephone service, etc. the costs of the call are paid by the called party.

There are a variety of methods for charging a calling party for the usage of services such as telephone service (e.g. voice calls, data transmission, Internet usage, sending facsimiles, etc.). In general the term "charging" is used to summarize all processes necessary to calculate the costs for the usage of a service (e.g. voice call, Internet usage, etc.) - from the collection of usage information to calculation of costs to creation and sending a bill. For the calculation a so called charging scheme or rate is used, which consists of parameters depending for example on time of usage of a service, duration of usage, distance, etc. and which is used for the usage information, too. This usage information is the input for the so called billing, which comprises only the creation and sending of a bill to a user.

The most common method is to charge a calling party on a per month basis, for example. The bills are based on usage of the service (e.g. voice call, Internet usage, etc.) and the billing is usually performed after the service is used - so the way of charging is also called "post-paid". The usage information is collected e.g. during a call or the usage of a service (e.g. Internet usage, etc.) and transferred to a so called billing system. The amount to be charged is calculated based on the usage information (e.g. rate, time of the day, duration of usage, etc.). Then bills are printed and sent to the user e.g. once a month.

In telephone networks (e.g. fixed network, PSTN, mobile network, etc.) the usage information is typically collected by storing it as a so called Call Detail Record CDR in a temporary memory location in the equipment (e.g. switching center, service provider equipment, etc.) which monitors a user's service usage. The collection of the usage information in the network equipment is also called accounting. Therefore the usage information is also called accounting information.

The CDR includes all information needed to calculate the charges for a particular communication session (e.g. call, Internet usage, etc.). Typically this information is the telephone number of the calling party, the telephone number called, the time of the call, the duration of the call and the distance of the call (e.g. local, national or international). On a regular basis, depending on the size of the memory location and the activity, the CDR is retrieved from the memory location by the billing system. The billing system then applies a billing algorithm against the CDR to calculate the user's charges for usage. Additional charges for equipment rental, flat monthly service charges, taxes, and so on, are calculated by the billing system and added to the usage charges. The total bill is then printed as an invoice and mailed to the user. Only upon receipt of the printed invoice does the user discover the charges accumulated. This often presents a problem for the user when it comes time to pay the bill, since the charges may be greater than anticipated. Because the user does not have any control of the costs of a call or a transaction during service usage.

Another type of charging method is the so called prepaid service. According to this method, a user for example can either buy a phone card worth a certain amount or buy a voucher worth a certain amount or send a service provider or a network operator a payment or authorizes that a prepaid amount be charged to his or her credit card depending on the different types of prepaid service. The phone card e.g. can be used until the balance is exhausted. The amount bought as a voucher can be credited to the user's account e.g. by dialing a specific number and entering the voucher's number together with e.g. a specific code printed on the voucher. The amount sent as payment to a service provider or network operator or by direct debiting from a credit card is e.g. directly credited to the account of a user. The prepaid amount is then used to access the services offered. During the usage of a service (e.g. call, voicemail, Internet usage, Short message service, etc.) the user's account is decremented as the usage progresses, i.e. the costs are currently calculated on basis of the accounting information (e.g. tariff, duration, etc.) and then subtracted from the balance of the account. To find out his or her current balance, the user can dial e.g. a certain short code or phone number. The current balance of the account is then provided e.g. by interactive voice response or by short message service.

There are different types of prepaid services, e.g.:
- Prepaid calling cards which are often used for long-distance calls or international calls made from abroad. Such cards can either employ prepaid credit system or credit card style system of credit depending on the overall telecommunication system used.
- Prepaid calling service which is offered to a user who holds an account with a certain network operator or service provider. The user can paid a certain amount in advance (e.g. by credit card, etc.) which is credited to his or her account in order to access the services.
- Prepaid card service which is often offered by mobile network operators, but also available in fixed networks. Typically all usual (mobile) phone services (e.g. voice call, Short message service, voicemail, etc.) are available to a so called prepaid user, except that he or she has to top up his or her account in advance before using these services. This can be done via a variety of mechanisms - e.g. vouchers, debit or credit cards.

Prepaid service typically offers a certain cost control during service usage in comparison to the post-paid method of charging. There is the possibility for the user to request the balance of his or her prepaid account. By spending only a certain amount which is credited to his or her user's account, the user knows the amount which can be spent for the usage of the services (e.g. voice calls, Internet usage, etc.). But the user only can control which amount is spent as a total. The user does not have any cost control on a per call resp. on a per transaction basis.

For a better call control a feature for credit limit supervision is offered, especially in connection with prepaid services. A credit limit - i.e. a maximum amount of credit that a network operator or service provider will extend to a user or the credit limit is a paid amount the user has already paid - is being supervised, while the user is using the offered services (e.g. voice calls, Internet usage, etc.). If the credit limit is exceeded, the usage of services (e.g. voice calls, Internet usage, etc.) is blocked for the user, until he or she either paid back the credit or has topped up his or her account. This feature also offers a certain cost control, but it restricts the costs of calls only to an accumulative charges mechanism.

A problem with all of these charging methods as well as with the feature "Credit limit supervision" is that they do not offer cost control on a per call resp. on a per transaction basis - i.e a transaction could be usage of e.g. a fax-service, Short message service, Internet usage, etc. The costs of calls and/or transaction can only be restricted to an accumulative charges mechanism or on a time related basis.

I.e., it is possible to define a limit or maximum amount that shall not be exceeded by all service usage, but the charges of the different calls and/or transactions are accumulated. It is also possible to set restrictions to the costs of all calls that take place in a particular time frame. The charges of these calls are accumulated, too. But there is no possibility for the user to define a limit for the costs of a certain call or transaction that shall not be exceeded.

### Summery of the invention

The goal of the present invention is to overcome the above mentioned problems and to offer a method for cost control on a per call basis.

Said problem is solved by the features mentioned in independent claim 1.

The main aspect of the invention is a method for call control using accounting information wherein said control is on a per call basis. Accounting related restrictions are entered for a certain call and these restrictions are supervised during said call. Said call is then automatically released and/or a user is notified, if the accounting related restrictions are reached.

### Advantage of the invention:

The present invention provides a simple solution for offering the possibility to control the costs of a call or a transaction on a per call/transaction basis by entering accounting related information (e.g. amount, time, credit limit, etc.) as restrictions. The user can enter different restrictions for each call, he or she makes. The user is then notified that the defined accounting related restriction (e.g. credit limit, amount, time, etc.) is reached and/or the call is released. So the user is given cost control on a per call resp. on a per transaction basis in a very simple way.

With the present invention the user can pre-determine the charging of the next call, he or she makes, quite easily.

Preferred embodiments of the invention are described in the dependent claims.

### Brief description of the invention

A preferred embodiment of the present invention will now be described with reference to the accompanying drawing in which:

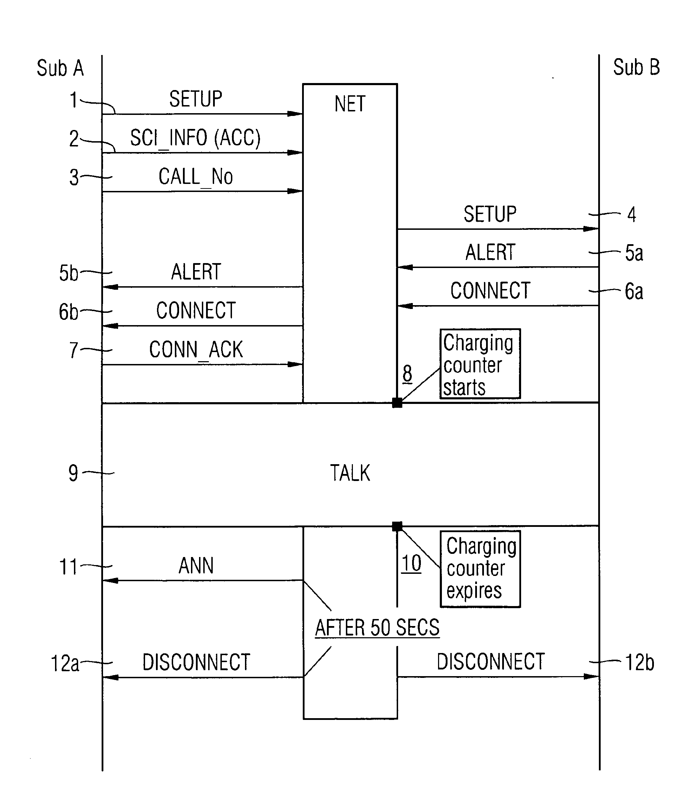

Figure 1 exemplary illustrates a call flow of the method for accounting based call control.

### Brief description of the drawing

Figure 1 shows a schematic call flow for the method for accounting based call control. In the present example an exemplary call is initiated by a calling party Sub A, who is also the user of accounting based call control. For example the calling party/user Sub A needs to make a call and this call is charged to his or her credit card. In that case the user Sub A most likely wants to restrict the charge of that call to a specific limit. The call is answered by a called party Sub B. The call is set up via a telephone network NET which can be e.g. a fixed network, a PSTN, a mobile network, etc.

The following solution describes a specific embodiment of the present invention which comprises the steps described below:
(1) Firstly, the calling party Sub A resp. the user Sub A of the Accounting based call control picks up e.g. a headset of his or her phone or his or her mobile phone in order to set up a call. A message SETUP is sent to the telephone network NET.
(2) Then the user Sub A enters an accounting related restriction ACC (e.g. credit limit) for the call by using subscriber controlled input SCI at the beginning of the call. The accounting related restriction ACC is sent to the telephone network NET by a message SCI_INFO and will be valid only for this particular call.
   Alternatively, the accounting related restrictions ACC can be administered via subscriber controlled input SCI or by a menu selection point at a given time (e.g. before a call, etc.). This offers the possibility to enter accounting related restrictions ACC which are e.g. valid for all calls, calls to certain groups of called parties (i.e. using a so called screening list, etc.), certain categories of calls (e.g. local, national, international, etc.), etc. For example, the user Sub A can administer different accounting related restrictions ACC for e.g. local calls (e.g. higher limit), national calls (e.g. medium limit) and international calls (e.g. low limit), in case to have a better control of his or her telecommunication expenses.
(3) Then the user Sub A dials the number of the called party Sub B which is sent to the telephone network NET by a message Call_No.
(4) Then a message SETUP is sent to the called party's Sub B side (e.g. telephone, mobile phone, etc.).
(5) (a) The called party's Sub B side answers with sending a message ALERT to the telephone network NET. The device of the called party Sub B (e.g. telephone, mobile phone, etc.) starts to ring, in case it is not busy or switched off.
   (b) The message ALERT is also forwarded to the calling party/user Sub A via the telephone network NET.
(6) (a) In case the call is answered by the called party Sub B, a message CONNECT is sent to the telephone network NET.
   (b) The message CONNECT is forwarded to the calling party/user Sub A resp. to his or her device.
(7) The message CONNECT is answered by the user's (calling party's) Sub A side with a message CONN_ACK which is sent to the telephone network NET.
(8) After the telephone network NET has received the message CONN_ACK, a supervision of the accounting related restriction ACC is started, e.g. by starting a charging counter which counts currently the amount of charge and e.g. compares it to the defined credit limit or e.g. the counter is set to the defined credit limit and counts down to zero during the call processing.
(9) The voice channel is set up between the user Sub A and the called party Sub B.
(10) If the accounting related restriction ACC is reached, e.g. the counter exceeds the defined credit limit or e.g. the counter has expired (i.e. it has reached zero), then
(11) the user Sub A is notified by an announcement ANN, which for example tells him or her that the call will be disconnected in e.g. 50 seconds. Instead of an announcement ANN another audio notification (e.g. tone) can be used as warning. It is also possible to use a visual notification instead of or additional to the audio notification. The announcement ANN or any other warning gives the user Sub A time to finish the communication properly.
   Alternatively, it would be useful to offer the user Sub A to possibility to cancel the accounting related restrictions ACC for the current call after the warning e.g. via subscriber controlled input SCI or by a menu selection point.
(12) (a + b) After a certain time (e.g. 50 seconds) a message DISCONNECT is sent to both parties Sub A, Sub B and the call is released.

Although the description of the present invention is done with a voice call, the method for accounting based call control can also be used for other transactions like e.g. usage of a fax-service, Short message service, etc. or to restrict the costs of Internet usage via modem and telephone line.

### Abbreviations:

- ACC: Account related restriction
- ANN: Announcement
- Call_No: Called Party Number or Dialled Number
- CDR: Call Detail Record
- CON_ACK: Connect Acknowledge
- NET: Telephone Network
- PIN: Personal Identification Number
- PSTN: Public Switched Telephone Network
- SCI: Subscriber Controlled Input
- SCI_INFO: Subscriber Controlled Input Information
- SECS: Seconds
- Sub A: Calling Party or Originator or User
- Sub B: Called Party

## Claims

1. Method for call control using accounting information wherein said control is on a per call basis **characterized in, that** accounting related restrictions (ACC) are entered for a certain call,
- that said accounting related restrictions (ACC) are supervised during said call,
- and that said call is automatically released and/or a user (Sub A) is notified, if said accounting related restrictions (ACC) are reached.

2. Method according to claim 1 **characterized in, that** credit limits are entered as accounting related restrictions (ACC) for a certain call.

3. Method according to any of claims 1 to 2 **characterized in, that** the user (Sub A) is notify by a notification message and/or by an announcement (ANN) and/or by a special tone, if said accounting related restrictions (ACC) are reached.

4. Method according to any of claims 1 to 3 **characterized in, that** said accounting related restrictions (ACC) are administered via the so called subscriber controlled input (SCI) or by a menu selection point.

5. Method according to any of claims 1 to 4 **characterized in, that** said accounting related restrictions (ACC) are administered for calls to a certain group of users and/or for certain categories of calls.

6. Method according to any of claims 1 to 5 **characterized in, that** a warning is sent some time before the call is released.

7. Method according to claim 6 **characterized in, that** either a visual or audio notification is used as warning.

8. Method according to any of claims 1 to 7 **characterized in, that,** if a user is given a warning before releasing the call, said accounting related restrictions (ACC) are cancelled for the call by the user and that the cancellation is entered by a menu selection point and/or by using the subscriber controlled input (SCI).
